# EUROPEAN PATENT SPECIFICATION

(11) **EP 2 757 925 B1**
(45) Date of publication and mention of the grant of the patent: **08.04.2015**
(21) Application number: 12759478.6
(22) Date of filing: 19.09.2012
(51) Int. Cl.: A47J 31/40, A47J 31/60

(54) **DISPENSER FOR HOT AND COLD BEVERAGES**
SPENDER FÜR WARME UND KALTE GETRÄNKE
DISTRIBUTEUR POUR BOISSONS CHAUDES ET FROIDES

(30) Priority: 20.09.2011 EP 11182000
(43) Date of publication of application: 30.07.2014
(73) Proprietor: Nestec S.A., 1800 Vevey (CH)
(72) Inventor: STIEGER, Michael (Mischa), CH-1350 Orbe (CH); BRUNNER, Yann, CH-1485 Nuvilly (CH)
(74) Representative: Ducreux, Marie
(86) International application number: PCT/EP2012/068462
(87) International publication number: WO 2013/041581

(56) References cited:
- EP-A1- 2 143 360
- WO-A1-2005/068349
- GB-A- 2 031 378

## Description

### Field of the invention

The present invention relates to beverage dispensers configured for providing alternatively hot and cold beverages.

### Background of the invention

Beverage dispensers that are able to dispense hot and cold beverages are known from GB 2 031 378 and EP 2 143 360 A2. These dispensers can produce for example cold beverages like iced tea, iced cappuccino, cold chocolate but also hot coffee, hot tea, hot soup, hot chocolate,... They usually comprise a hot water production fluid system and a cold water production system. The outlets of the both systems are usually connected to a common water dispensing nozzle for the preparation of the beverage by contact of the hot or cold water with a beverage ingredient.

In these dispensers it has been noticed that when a cold beverage is produced just after the preparation of a hot beverage, the temperature of the cold beverage is not as cold as it should be and vice-versa when a hot beverage is produced just after the preparation of a cold beverage, the temperature of the hot beverage is not as hot as it should be. The temperature of each beverage is influenced by the temperature of the precedent dispensed beverage.

For the production of hot beverages, food ingredients often develop their optimal aroma at a specific temperature. Consequently the fact of not having the expected temperature of the beverage influences the taste of the beverage perceived by the consumer. In the case of a hot beverage, the problem particularly appears when an espresso type coffee is produced because the beverage volume is small. As for cold beverages, consumers also expect to get real cold beverages and not ambient temperature beverages.

The object of the present invention is to propose a beverage dispenser able to produce alternatively hot and cold beverages at the expected temperatures.

Another object of the present invention is to improve beverage dispensers able to produce alternatively hot and cold beverages, the beverages presenting the expected in-cup profile.

### Summary of the invention

According to a first aspect, the invention concerns a beverage dispenser according to claim 1.

The beverage dispenser of the present invention produces beverages by interaction between a beverage ingredient and water. The beverage ingredient can be a soluble beverage ingredient concentrate like a soluble powder or a liquid concentrate or it can be an infusable beverage ingredient like a roast and ground coffee powder, tea leaves or herbal tea. The water can either dissolve the soluble beverage ingredient concentrate or extract the infusable beverage ingredient.

The dispenser of the present invention is configured for providing interaction between the beverage ingredient and either hot or cold water for producing either a hot or a cold beverage. Consequently the dispenser comprises a water source, which is usually a water tank. The tank can be directly connected to tap water.

The dispenser comprises at least one pump connected to the water source for pumping the water from the water source.

The dispenser comprises a heater or boiler and a cooler or chiller for either heating or cooling the water pumped by the pump from the water source. Both the heater and the cooler are connected through pipes to the pump. The pipe of the dispenser downstream of the pump generally divides between a pipe directing pumped water to the heater and a pipe directing pumped water to the cooler. Generally the beverage dispenser comprises at least one valve associated to the heater for controlling the dispensing of hot water from the heater. This valve is preferably placed downstream to the heater. Generally the beverage dispenser comprises also at least one valve associated to the cooler for controlling the dispensing of cold water from the cooler. This valve is preferably placed downstream to the cooler.

The pipes downstream to the cooler and downstream to the heater join together in a feeding pipe connected to at least one water outlet. Depending on the opening of either the valve associated to the heater or the valve associated to the cooler, either hot pumped water or cold pumped water can flow through the feeding pipe. The feeding pipe delivers hot or cold pumped water to at least one water outlet. The dispenser can comprise at least one valve associated to the at least one water outlet for controlling the connection of the feeding pipe with the at least one water outlet.

According to the invention the dispenser comprises a device for emptying the feeding pipe and the at least one water outlet after the dispensing of a beverage.

According to a first embodiment the device for emptying the feeding pipe can be a sucking device.

According to a second preferred embodiment the device for emptying the feeding pipe can be a blowing device, preferably an air pump. The air pump provides a flow of air, preferably compressed air, to the feeding pipe and the at least one water outlet in order to evacuate residual water from them.

Generally the device for emptying the feeding pipe is connected to the upper part of the feeding pipe. The dispenser comprises a return pipe for connecting the feeding pipe to the water source and a valve for controlling the connection of the feeding pipe with said return pipe. Accordingly water that is evacuated from the feeding pipe can be returned to the water source.

The dispenser of the present invention can also comprise at least one or several of the following elements usually present in dispensers for preparing beverages, in particular : container(s) for storing food ingredient(s), device(s) for dosing the food ingredients, mixer(s) for mixing the food ingredient(s) and the water, water nozzle(s) connected to the water outlet(s). The dispenser also usually comprises a control unit for controlling the opening and closure of the valves of the dispenser and in particular the method for emptying the feeding pipe after each beverage preparation.

According to a second aspect the invention concerns a process for preparing a beverage according to claim 8.

According to a first embodiment the device for emptying the dispensing pipe is an air pump and the dispenser comprises a return pipe for connecting the feeding pipe to the water source and a valve for controlling the connection of the feeding pipe with said return pipe, and during step c) :
- the valve associated to the at least one water outlet for controlling the connection of the feeding pipe with the at least one water outlet is closed, and
- the valve for controlling the connection of the feeding pipe with the return pipe connecting the feeding pipe to the water source is opened. In this first embodiment the water remaining in the feeding pipe after the preparation of a beverage is totally evacuated from the feeding pipe and returned to the water source for recirculation.

According to a second embodiment the device for emptying the dispensing pipe is an air pump and during step c) the at least one valve associated to the at least one water outlet for controlling the connection of the feeding pipe with the at least one water outlet is opened. In this embodiment the water remaining in the feeding pipe after the preparation of a beverage is totally evacuated from the feeding pipe through the at least one water outlet. Preferably this step c) is implemented immediately at the end of the beverage preparation so that the remaining water is delivered in the beverage itself.

### Brief description of the drawings

The characteristics and advantages of the invention will be better understood in relation to
- Figure 1 which is a schematic diagram of the fluid system of a beverage dispenser according to the present invention,
- Figure 2 which is schematic diagram of the fluid system of a beverage dispenser according to the present invention associated to a specific water outlet assembly.

### Detailed description of the drawings

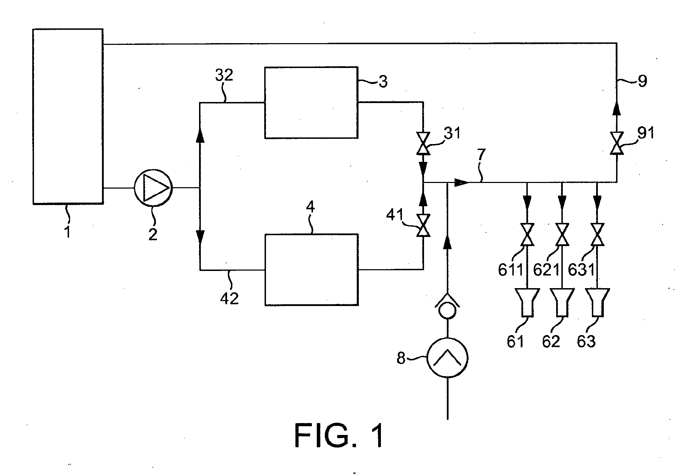

Figure 1 illustrates the fluid system of the dispenser of the present invention. It comprises a water source 1 that can be a tank optionally connected to tap water depending on the size of the dispenser. The dispenser comprises a pump 2 for pumping water from the source 1 in direction of a heater 3 and a cooler 4. The cooler 4 and the heater 3 are connected to the pump 2 through two separate pipes 32, 42. Any kind of heater of cooler can be used according to the present invention. Each of the heater and the cooler are connected to a feeding pipe 7 for delivering the pumped water - either heated or cooled - to three water outlets 61, 62, 63. Although the figure illustrates 3 water outlets, any number of water outlets can be used in the present invention. The dispenser comprises a valve 31 downstream to the heater 3 for controlling the connection of the heater with the feeding pipe 7. Similarly the beverage dispenser comprises at least one valve 41 downstream to the cooler 4 for controlling the connection of the cooler with the feeding pipe 7. Depending if the valve 41 of the cooler or the valve 31 of the heater is opened, cold or hot water is provided to the feeding pipe 7 and at the water outlets 61, 62, 63. The water outlets 61, 62, 63 comprise respective valves 611, 621, 631 for opening the water outlets for the preparation of beverages and closing the water outlets after the preparation of a beverage. The water outlets can be associated to water nozzles that can create jets e.g. in a drinking cup or the water outlets can be associated to a mixing chamber in which water mixes with at least one beverage ingredient.

In the prior art, after a beverage had been dispensed - e.g. a cold beverage - the valves 611, 621, 631 were closed and cold water stayed in the feeding pipe 7 and upstream of the valves 611, 621, 631. When a hot beverage was ordered thereafter, the valve 41 cooperating with the heater 3 and the valves 611, 621, 631 was opened to deliver hot water. In that configuration the beverage was also prepared with the residual cold water from the precedent beverage that had remained in the feeding pipe and the water outlets. Consequently the next hot beverage was prepared with a part of hot water and was not as hot as expected by the consumer. Moreover due to the presence of the cold water from the precedent beverage production in the pipes, said pipes were cold and a part of the heat of the hot water dosed for the next hot beverage was used for heating the cold pipe.

According to the present invention, the dispenser comprises an air pump 8 that blows air in the feeding pipe 7 to force the water that remains in the feeding pipe 7 to evacuate therefrom. Preferably as illustrated in Figure 1, the water is forced to return to the water source 1 through the return pipe 9 connecting the feeding pipe 7 to the water source 1. A valve 91 enables the opening of return pipe 9 when the air pump 8 is operating and the closing of return pipe 9 when a beverage is dispensed so as to lead water to the water outlets 61, 62, 63.

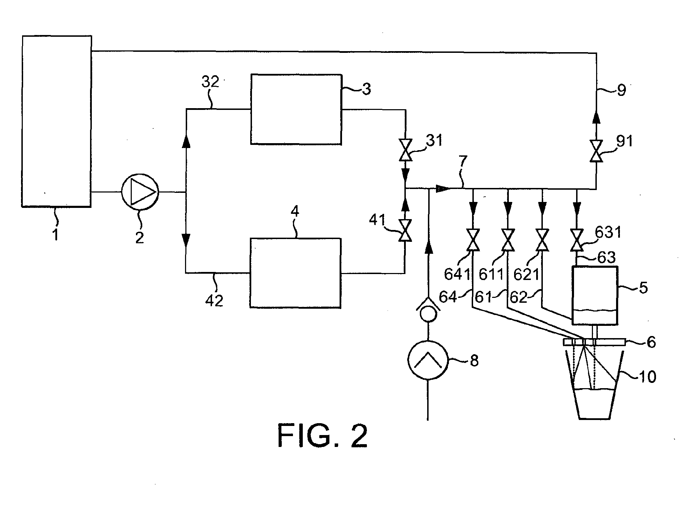

Figure 2 illustrates the same fluid system as the figure 1 except that the water outlets are different. The dispenser of Figure 2 presents four water outlets controlled by four valves 611, 621,631,641.

Two water outlets 62, 63 cooperate with a mixing chamber 5 : one outlet 63 aims at introducing water for mixing it with a food ingredient present in the mixing chamber (part of the machine for introducing the ingredient is not illustrated) - e.g. for preparing a espresso coffee with crema - and the other outlet 62 aims at providing make-up water at the bottom part of the chamber, e.g. for preparing a longer coffee when this water is mixed with the beverage mixed in the chamber 5. The outlet of the mixing chamber emerges in a nozzle assembly 6 for delivering the beverage to a cup 10.

The two other water outlets 61, 64 direct also water to the nozzle assembly 6 for providing water jet effects in the cup. The nozzle assembly 6 can be designed to produce :
- a water jet in the cup 10 with the water coming from the water outlet 61, e.g. for foaming a milk powder or a chocolate powder present at the bottom of the cup. The nozzle head can be designed to divide the water of outlet 61 in several jets oriented to hit the cup at different positions in order to improve dissolution and/or foaming.
- a low pressure water jet in the cup 10 with the water coming from the water outlet 64, e.g. for dissolving a tea powder present at the bottom of the cup without creating bubbles.

Such a nozzle assembly can be the one described in WO 2010/034722 but any other assembly of nozzles could be used. Due to the numerous pipes in which water can stay between the preparation of two beverages, the elimination of water from these pipes, nozzles and chamber becomes critical for a better control of the in-cup beverage temperature.

The dispenser of the present invention presents the advantage of enabling a better control of the temperature of the dispensed beverage. It has been observed that for cold beverages the difference of temperatures of the diluent at the cooler outlet and at the dispenser outlet can be decreased by several degrees by means of the implementation the present invention.

The dispenser of the present invention presents the advantage of enabling the preparation of alternatively hot and cold beverages, each beverage presenting the temperatures set for an optimal taste.
- 1: water source
- 2: pump
- 3: heater
- 4: cooler
- 5: mixing chamber
- 6: nozzles head
- 7: feeding pipe
- 8: air pump
- 9: pipe
- 31, 41, 611, 621, 6231, 91: valves
- 61, 62, 63: outlet
- 10: cup

## Claims

1. A beverage dispenser for dispensing hot or cold beverages by interaction between a beverage ingredient with hot or cold water includes :
- a water source (1),
- at least one pump (2) connected to the water source for pumping the water from the water source,
- a heater (3) for heating the pumped water,
- a cooler (4) for cooling the pumped water,
- at least one water outlet (61, 62, 63),
- a feeding pipe (7) connecting the at least one water outlet to the heater and to the cooler, wherein the dispenser comprises a device (8) for emptying the feeding pipe and the at least one water outlet after the dispensing of a beverage, **characterized in that**
the dispenser comprises a return pipe (9) for connecting the feeding pipe (7) to the water source (1) and a valve (91) for controlling the connection of the feeding pipe with said return pipe.

2. Beverage dispenser according to Claim 1, wherein the device (8) for emptying the feeding pipe is a sucking device

3. Beverage dispenser according to Claim 1, wherein the device (8) for emptying the feeding pipe is a blowing device, preferably an air pump.

4. Beverage dispenser according to any one of the precedent claims, wherein the device (8) for emptying the feeding pipe is connected to the upper part of the feeding pipe (7).

5. Beverage dispenser according to any one of the precedent claims, wherein it comprises at least one valve (611, 621, 631) associated to the at least one water outlet (61, 62, 63) for controlling the connection of the feeding pipe (7) with the at least one water outlet.

6. Beverage dispenser according to any one of the precedent claims, wherein it comprises at least one valve (31) associated to the heater (3) for controlling the connection of the heater with the feeding pipe (7).

7. Beverage dispenser according to any one of the precedent claims, wherein it comprises at least one valve (41) associated to the cooler (4) for controlling the connection of the cooler with the feeding pipe (7).

8. Process for preparing a beverage with a beverage dispenser according to Claim 3 comprising the steps of :
a) delivering hot or cold water to the at least one water outlet (61, 62, 63) by :
- pumping water from the water source (1),
- opening either the valve (31) associated to the heater or the valve (41) associated to the cooler for delivering either hot water or cold water to the feeding pipe (7)
- opening the valve (611, 621, 631) associated to the at least one water outlet to deliver the hot or cold water fir the beverage preparation,
b) stopping hot or cold water delivery to the at least one water outlet (61, 62, 63) by :
- stopping the pump (2)
- closing the valve (31) associated to the heater and the valve (41) associated to the cooler
c) emptying the feeding pipe (7) by :
- operating the device (8) for emptying the dispensing pipe
wherein during step c) :
- the valve (611, 621, 631) associated to the at least one water outlet for controlling the connection of the feeding pipe (7) with the at least one water outlet (61, 62, 63) is closed, and
- the valve (91) for controlling the connection of the feeding pipe with the return pipe (9) connecting the feeding pipe to the water source is opened.

## Patentansprüche

1. Getränkespender zur Abgabe heißer oder kalter Getränke durch Interaktion zwischen einer Getränkezutat mit heißem oder kaltem Wasser umfasst:
- eine Wasserquelle (1),
- mindestens eine an die Wasserquelle angeschlossene Pumpe (2) zum Pumpen des Wassers aus der Wasserquelle,
- ein Heizgerät (3) zum Erwärmen des gepumpten Wassers,
- ein Kühlgerät (4) zum Kühlen des gepumpten Wassers,
- mindestens einen Wasserauslass (61, 62, 63),
- eine Zufuhrleitung (7) für den Anschluss des mindestens einen Wasserauslasses an das Heizgerät und an das Kühlgerät, wobei der Spender eine Vorrichtung (8) zum Leeren der Zufuhrleitung und des mindestens einen Wasserauslasses nach der Abgabe eines Getränks aufweist, **dadurch gekennzeichnet, dass** der Spender eine Rückleitung (9) für den Anschluss der Zufuhrleitung (7) an die Wasserquelle (1) und ein Ventil (91) für die Steuerung des Anschlusses der Zufuhrleitung an die Rückleitung aufweist.

2. Getränkespender nach Anspruch 1, wobei die Vorrichtung (8) zum Leeren der Zufuhrleitung eine Saugvorrichtung ist.

3. Getränkespender nach Anspruch 1, wobei die Vorrichtung (8) zum Leeren der Zufuhrleitung eine Blasvorrichtung, vorzugsweise eine Luftpumpe, ist.

4. Getränkespender nach einem der vorhergehenden Ansprüche, wobei die Vorrichtung (8) zum Leeren der Zufuhrleitung an den oberen Teil der Zufuhrleitung (7) angeschlossen ist.

5. Getränkespender nach einem der vorhergehenden Ansprüche, wobei er mindestens ein Ventil (611, 621, 631) aufweist, das mit dem mindestens einen Wasserauslass (61, 62, 63) verbunden ist, um den Anschluss der Zufuhrleitung (7) an den mindestens einen Wasserauslass zu steuern.

6. Getränkespender nach einem der vorhergehenden Ansprüche, wobei er mindestens ein Ventil (31) aufweist, das mit dem Heizgerät (3) verbunden ist, um den Anschluss des Heizgerätes an die Zuführleitung (7) zu steuern.

7. Getränkespender nach einem der vorhergehenden Ansprüche, wobei er mindestens ein Ventil (41) aufweist, das mit dem Kühlgerät (4) verbunden ist, um den Anschluss des Kühlgerätes an die Zufuhrleitung (7) zu steuern.

8. Verfahren für die Zubereitung eines Getränks mit einem Getränkespender nach Anspruch 3, das die folgenden Schritte aufweist:
a) Zuführen von heißem oder kaltem Wasser zu dem mindestens einen Wasserauslass (61, 62, 63) durch:
- Pumpen von Wasser aus der Wasserquelle (1),
- Öffnen entweder des Ventils (31), das mit dem Heizgerät verbunden ist, oder des Ventils (41), das mit dem Kühlgerät verbunden ist, um der Zufuhrleitung (7) entweder heißes Wasser oder kaltes Wasser zuzuführen
- Öffnen des Ventils (611, 621, 631), das mit dem mindestens einen Wasserauslass verbunden ist, um heißes oder kaltes Wasser für die Getränkezubereitung zuzuführen,
b) Stoppen der heißen oder kalten Wasserzufuhr zu dem mindestens einen Wasserauslass (61, 62, 63) durch:
- Stoppen der Pumpe (2)
- Schließen des Ventils (31), das mit dem Heizgerät verbunden ist, und des Ventils (41), das mit dem Kühlgerät verbunden ist
c) Leeren der Zufuhrleitung (7) durch:
- Betätigen der Vorrichtung (8) zum Leeren der Abgabeleitung
wobei während Schritt c):
- das Ventil (611, 621, 631), das mit dem mindestens einen Wasserauslass zum Steuern des Anschlusses der Zufuhrleitung (7) an den mindestens einen Wasserauslass (61, 62, 63) verbunden ist, geschlossen ist, und
- das Ventil (91) zum Steuern des Anschlusses der Zufuhrleitung an die Rückleitung (9), mit dem die Zufuhrleitung an die Wasserquelle angeschlossen ist, geöffnet ist.

## Revendications

1. Distributeur de boisson destiné à distribuer des boissons chaudes ou froides par interaction entre un ingrédient de boisson avec de l'eau chaude ou froide, comprenant :
- une source d'eau (1),
- au moins une pompe (2) reliée à la source d'eau pour pomper l'eau à partir de la source d'eau,
- un dispositif de chauffage (3) pour chauffer l'eau pompée,
- un dispositif de refroidissement (4) pour refroidir l'eau pompée,
- au moins une sortie d'eau (61, 62, 63),
- un conduit d'approvisionnement (7) reliant ladite au moins une sortie d'eau au dispositif de chauffage et au dispositif de refroidissement,
dans lequel le distributeur comprend un dispositif (8) pour vider le conduit d'approvisionnement et ladite au moins une sortie d'eau après la distribution d'une boisson,
**caractérisé en ce que** le distributeur comprend un conduit de retour (9) pour relier le conduit d'approvisionnement (7) à la source d'eau (1) et une valve (91) pour contrôler la liaison du conduit d'approvisionnement avec ledit conduit de retour.

2. Distributeur de boisson selon la revendication 1, dans lequel le dispositif (8) pour vider le conduit d'approvisionnement est un dispositif d'aspiration.

3. Distributeur de boisson selon la revendication 1, dans lequel le dispositif (8) pour vider le conduit d'approvisionnement est un dispositif de soufflage, de préférence une pompe à air.

4. Distributeur de boisson selon l'une quelconque des revendications précédentes, dans lequel le dispositif (8) pour vider le conduit d'approvisionnement est relié à la partie supérieure du conduit d'approvisionnement (7).

5. Distributeur de boisson selon l'une quelconque des revendications précédentes, lequel comprend au moins une valve (611, 621, 631) associée à ladite au moins une sortie d'eau (61, 62, 63) pour contrôler la liaison du conduit d'approvisionnement (7) avec ladite au moins une sortie d'eau.

6. Distributeur de boisson selon l'une quelconque des revendications précédentes, lequel comprend au moins une valve (31) associée au dispositif de chauffage (3) pour contrôler la liaison du dispositif de chauffage avec le conduit d'approvisionnement (7).

7. Distributeur de boisson selon l'une quelconque des revendications précédentes, lequel comprend au moins une valve (41) associée au dispositif de refroidissement (4) pour contrôler la liaison du dispositif de refroidissement avec le conduit d'approvisionnement (7).

8. Procédé destiné à préparer une boisson avec un distributeur de boisson selon la revendication 3 comprenant les étapes suivantes :
a) fourniture d'eau chaude ou froide à ladite au moins une sortie d'eau (61, 62, 63) par
- pompage d'eau à partir de la source d'eau (1),
- ouverture soit de la valve (31) associée au dispositif de chauffage soit de la valve (41) associée au dispositif de refroidissement pour fournir soit de l'eau chaude soit de l'eau froide au conduit d'approvisionnement (7),
- ouverture de la valve (611, 621, 631) associée à ladite au moins une sortie d'eau afin de fournir l'eau chaude ou froide pour la préparation de boisson,
b) arrêt de la fourniture d'eau chaude ou froide à ladite au moins une sortie d'eau (61, 62, 63) par :
- arrêt de la pompe (2),
- fermeture de la valve (31) associée au dispositif de chauffage et de la valve (41) associée au dispositif de refroidissement,
c) vidange du conduit d'approvisionnement (7) par :
- actionnement du dispositif (8) pour vider le conduit d'approvisionnement,
dans lequel au cours de l'étape c) :
- la valve (611, 621, 631) associée à ladite au moins une sortie d'eau pour contrôler la liaison du conduit d'approvisionnement (7) avec ladite au moins une sortie d'eau (61, 62, 63) est fermée, et
- la valve (91) pour contrôler la liaison du conduit d'approvisionnement avec le conduit de retour (9) reliant le conduit d'approvisionnement à la source d'eau est ouverte.
